# EUROPEAN PATENT SPECIFICATION

(11) **EP 3 484 300 B1**
(45) Date of publication and mention of the grant of the patent: **26.08.2020**
(21) Application number: 17749533.0
(22) Date of filing: 12.07.2017
(51) Int. Cl.: A22C 17/00, B02C 18/36

(54) **REVERSIBLY MODULAR ELASTIC CUTTER FOR PRODUCING SALAMIS**
REVERSIBLES MODULARES ELASTISCHES SCHNEIDELEMENT ZUR HERSTELLUNG VON SALAMI
DISPOSITIF DE COUPE ÉLASTIQUE RÉVERSIBLE MODULAIRE POUR LA FABRICATION DE SALAMI

(30) Priority: 14.07.2016 IT 201600073507
(43) Date of publication of application: 22.05.2019
(73) Proprietor: Quadrana, Marcello, 40069 Zola Predosa (BO) (IT)
(72) Inventor: Quadrana, Marcello, 40069 Zola Predosa (BO) (IT)
(74) Representative: Fiammenghi, Eva
(86) International application number: PCT/IB2017/054202
(87) International publication number: WO 2018/011726

(56) References cited:
- WO-A1-2012/101536
- DE-A1-102008 019 812
- IT-A1- BO20 030 700
- US-B1- 8 257 148

## Description

### Field of the art

The present invention refers to the mechanical industry. More in detail, the present invention refers to a distinctive cutter to be used in industrial plant cutting devices suitable for processing animal meat for producing sausages, more specifically for producing salamis.

### Prior art

Sausages, and pork cold cuts in general, are currently one of the food-stuffs most produced, sold and bought by consumers worldwide. These products are generally raw or cooked meat-based food-stuffs containing salt, animal fat, spices, preservatives (if any), and that are inserted into closed containers, conventionally constituted by animal intestines.

The production process is known and it is absolutely particular. Modern technology provides for that fresh meat reaches the production plant in separately frozen anatomic pieces of swine. After reaching an ideal temperature for processing thereof, this meat is minced and turned into a creamy emulsion through various stages in special meat mincing machines. Depending on the type of sausage to be produced, fat cubes measuring about one cubic centimetre and obtained from the neck fat, the hardest and most prestigious fat and from the lard obtained from the back part of the pork, can be prepared separately. The thin emulsion is then mixed with the fat cubes and then salt, water and spices (or flavours in form of powder or solution) are added. Additives are added subsequently and the mixture thus obtained is stuffed into the casing at the desired amounts. The casings used for stuffing can be natural or artificial and the latter are usually used for the smaller dimensions. In addition, the sausage is subjected to cooking using special dry air ovens, within times that vary from a few hours up to a whole day depending on the dimension and it is important that the internal temperature reaches 70°C. Then their follows sprinkling using cold water and storage in a cooler to stabilise the product. The quality of a sausage mainly depends on factors such as the quality of the raw material utilised, for instance the composition, the chemical-physical characteristics and microbiological characteristics, the additives utilised, storage, distribution of the finished product definitely as well as the production technology applied. Though it can be deemed advanced, the latter reveals some drawbacks lying in the need for performing specific process steps by means of elements and systems that can - at times - entail problems regarding the damage and early wear of the very components and which often affect the properties of the finished product. More in detail, the rubbing of the cutters or the meat cutting devices against the fixed discs for the extrusion of mortadella often causes the release of metal material with high content of iron and other metals in the product being processed. This rubbing is rather consistent if we consider the very high quantities, such as pressure and force, acting on the parts of the plant. The release and presence of these metal substances in the minced product actually causes subsequent oxidation-reduction mechanisms that occur when these substances come to contact with the meat thus altering the final properties thereof. The current utilised cutting devices are substantially disc-shaped, rotating around a central axis. They are constituted by a support, suitable to support the cutters and by a plurality of variously shaped blades but which are usually rectangular. These cutters are positioned between two fixed extrusion discs, thus generating an alternating sequence of discs and cutters in the cutting unit. The cutters, alongside the support and blades thereof, are arranged so as to have - both in inoperative and operative condition - the upper and lower surfaces arranged at contact with the surfaces of the neighbouring extrusion fixed discs. This structural and configuration characteristic causes strong rubbing of the contact surfaces when the plant is running. More in detail, the rubbing occurs when the passage of considerable amount of meat, pressed towards the cutting blades by the auger, causes the occurrence of high pressure on the circular surfaces of the elements involved in the process. In addition, the pressure that develops is not distributed uniformly over all points of the surfaces but it is higher in proximity of the central areas of said surfaces. The effect of this aspect determines the occurrence of deformations and concavities in the central areas of the fixed discs and cutters. Besides the aforementioned consequences regarding the release of metal material into the processing product, these deformations trigger the undesired rubbing phenomena between the surfaces of the cutters and the surfaces of the fixed discs.

In order to overcome the aforementioned drawbacks, various solutions have been proposed over the last years, most of which represent the patent application contents, (with the applicant in question as the designated inventor) which revealed to be efficient at overcoming the aforementioned drawbacks observed in the processing of the meat, for producing the sausages and mortadella in this specific case.

For example, document WO2014162225 describes a cutting device comprising a support having a plurality of radial arms suitable to support a respective plurality of blades. Each blade is connected to the radial arm thereof thanks to a pin to be housed in a channel that extends longitudinally into the body of each blade. Said housing does not coincide with the longitudinal axis of the blade but it is offset with respect to the latter so as to define two asymmetric portions for each blade. This characteristic enables generating an oscillating motion of the blade with respect to the inner pin thereof and reduce friction between the blades and the neighbouring extrusion discs under the action of the pressure exerted by the meat being processed. The entirety reducing friction and the release of metal material into the meat being processed.

Document WO2014162222 describes an improved cutter holder machine, for processing meat. In particular said document refers to a cutter holder rotor with improved cutters for a machine for processing meat for producing mortadella. The rotor comprises a central hub from which various radial arms integrally joined with said central hub extend. In addition, the ends of such radial arms, opposite to the central hub, are connected to radial cutters by means of a connection appendage or mounting appendage. The latter is preferably integrally joined to the corresponding cutter, substantially forming the base thereof that can be inserted and bolted into a respective recess obtained in the end of the radial arm. One of the main characteristics of the rotor subject of the aforementioned document lies in that said appendage bears a groove in the material it is made of. Such groove confers a given degree of elastic yieldability which enables a given degree of oscillation of the cutters that adapt to the deformations of the neighbouring fixed disc due to the pressure exerted by the meat being processed. The entirety reducing friction and the possibility of releasing metal material into the meat being processed and thus into the finished product in this case too.

The aforementioned documents and other patents filed in this field of application (e.g. 2012/101536 A1) show that it is important to define a partial mobility and elasticity of the cutters, precisely with the aim of reducing if not eliminating the release of metal material into the minced product, thus also averting evident risks for the health of the consumers. Another object attained by the currently available patents lies in enabling an easy and quick maintenance of the single cutters as well as the cleanliness thereof from minced meat, failure to which the functionality thereof would be ineffective.

Regarding this, an object of the present industrial invention patent application, described in detail hereinafter, is to provide a new and innovative type of disassemblable cutter, to be used in sausage production plants and, specifically, in the step of cutting/mincing meat, that - besides offering all the advantages revealed by the devices subject of the aforementioned documents - is easy to install, uninstall and maintain. A further object of the present invention is to pre-load each cutter with a predetermined tension, which enables a pre-established elastic movement of the bending arms of each cutter it is provided with.

### Description of the invention

The present invention refers to a new and innovative cutter with the technical features of claim 1 that can be used for processing animal meat for the industrial production of sausages, preferably salamis. More in detail, the cutter of the present industrial invention patent application represents one of the parts of the cutting units comprised in animal meat processing plants for producing sausages. Even more in detail, said cutter represents one of the components that intervene in the step for cutting and extruding/mincing meat being processed to obtain a mixture subsequently subjected to other processing steps. Still more specifically, the cutter 100 in question is studied and configured to be particularly suitable for the step of cutting/extruding/mincing the meat for producing salamis.

Given that it is a preferably industrial use, it should be observed that the plants for producing sausages use a plurality of devices designated for cutting/extruding/mincing meat. Thus, in such type of plant, the cutter in question, which is part of a cutting device, is used combined with other identical cutting devices. Specifically, said cutting devices should be arranged axially to each other and so as to be spaced by meat extrusion discs. The surfaces of the extrusion discs and surfaces of the neighbouring cutting devices come into contact and, as previously mentioned, when the plant is running, such contact is so consistent under the action of the pressure exerted by the considerable amount of meat that there occurs high frictions leading to unwanted consequences both as regards the characteristics observable in the finished product and as concerns the wholeness of the plant components themselves. The cutting device provided with the cutters in question, brilliantly overcomes the aforementioned drawbacks thanks to the modular features of the cutters comprised therein and their easy mode of assembly to the body of said device. More in detail, similarly to those of the prior art, the cutter holder 200 required for the installation of the cutters in question, appears as a radial structure in which a plurality of radial arms 203 - that terminate in a perimeter circular crown 204, concentric to said central metal body 202 - depart from a central metal body 202, provided with a central hole 201 suitable to be connected to the driving shaft of the entire plant. Advantageously, each of said radial arms 203 is provided with a housing seat 205 constituted by a longitudinal direction fissure configured to enable the reversible housing of a corresponding cutter 100 like the one described hereinafter. More in detail, said housing seat 205 will be arranged in proximity of said perimeter circular crown 204 and, possibly, the radial arm 203 shall be provided, at said seat 205, with common mechanical means such as screws, pins or the like, for stably but reversibly fixing the cutter 100, in the correct operating position. The dimensioning of said seat 205 must consider the total dimensions of the cutter 100 intended to be utilised in the plant. In particular, said cutter 100 will in any case be inscribed in a parallelepiped shaped element with dimensions measured between 30 mm X 15 mm X 3 mm and 90 mm X 30 mm X 10 mm.

The components of said cutter 100 are represented by a first T-shaped element 10 and a second C-shaped element 20. Said first element 10 is constituted by an outer sharp profile 11 and by a central projection 15 provided, laterally, with a pair of concavities 16-16'. Said second element 20 is constituted by an outer sharp profile 21 and by a pair of bending arms 26-26' provided, at the relative distal ends, with a convexity 27-27'. Said bending arms 26-26', departing from the lateral ends of the second element 20 extending towards the centre, confer the aforementioned "C" shape to said second element 20. This shape is visible to the observer also due to the fact that a fissure 30 is present between the inner surface of said sharp profile 21 and said bending arms 26-26'. Said first element 10 and said second element 20 of the cutter 100 are suitable to be mutually and reversibly engaged in a first assembled configuration, in which the convexities 27-27' of the two bending arms 26-26' are reversibly but stably lodged in the corresponding cavities 16-16' of the first element 10.

Besides those present due to the particular configuration of said second element 20, the fissures 30 that are created when said cutter 100 is in said first assembled configuration are characterised by a thickness comprised between 0.2 mm and 3 mm, preferably 1 mm. The latter have the advantageous function of enabling the bending of the bending arms 26-26' due to the pressure caused by the resistance of the meat to be minced. Actually, the strong pressure exerted by the meat deforms the fixed disc arranged upstream of the cutter holder 200. Pressure and temperatures high enough to melt the metal and release part thereof into the minced meat would occur were the cutters 100 to be completely rigid. The elasticity of the cutter 100 has the function of adapting to the deformations that occur during operation, thus guaranteeing an optimal quality of the meat and the cutting efficiency.

Furthermore, it is preferable that the length of the bending arms 26-26' be equivalent to about ¼ of the overall length of the cutter 100.

Advantageously, the composition of the first and the second element 10, 20 in said first assembled configuration, may occur using common mechanical means, such as, for example, a gripper, so that the bending arms 26-26' are pre-loaded with a pre-established tension.

In order to confer appropriate tension by compensating the first and the second element 10, 20 in the first assembled configuration, it is suitable that the cutter 100 it is constituted of be made of any metal or metal alloy, preferably any elastic metal material.

Still using grippers or any other suitable mechanical means, the first and the second element 10, 20 can be disassembled in a quick, easy and reversible manner so as to confer a second disassembled configuration to the cutter 100. Thus, the cutter 100 maintenance and cleaning operations are advantageously simplified.

Advantageously, the cutter 100 in question reveals an elastic behaviour under the action of strong mechanical stresses, thus serving the purpose of the invention even for a long period of operation.

The entirety making the cutter in question capable of considerably efficiently serving the purpose of the invention, particularly if said cutter is used for producing salamis.

### Description of the figures

The invention will be described hereinafter in at least one preferred embodiment, provided by way of non-limiting example, with reference to the attached figures, wherein:

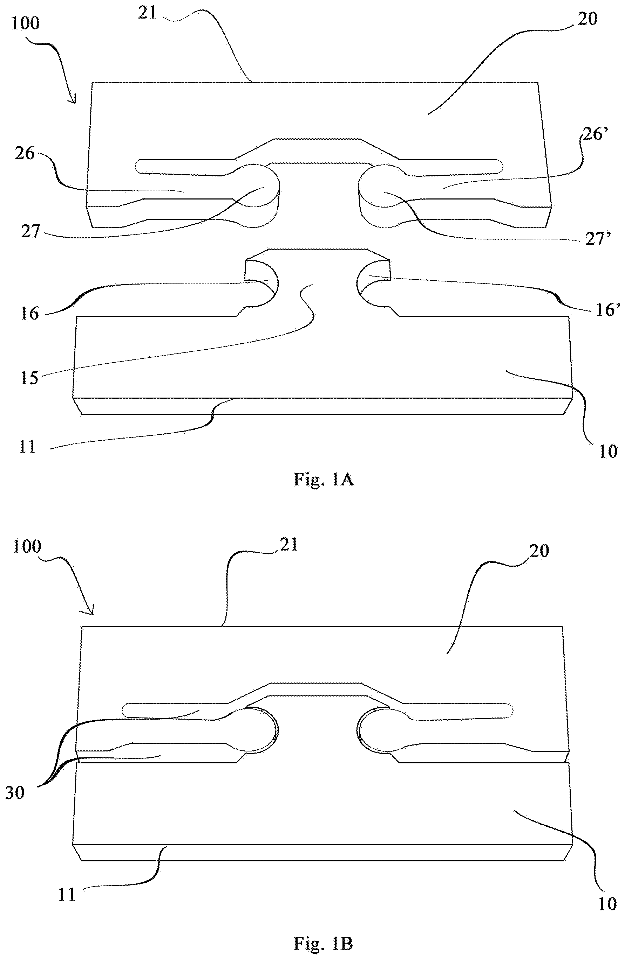

- FIGURE 1A and FIGURE 1B respectively show the disassembled and assembled configuration of the cutter 100 particularly suitable for mincing salamis. The second C-shaped element 20 constituted by an outer sharp profile 21 and by the two bending arms 26-26' having the convexities 27-27' at the distal ends, can be observed. The first T-shaped element 10 having the outer sharp profile 11, the central projection 15 and the two concavities 16-16' are also shown. FIG 3B also shows the fissures 30 that are formed when the cutter 100 is in assembled configuration.

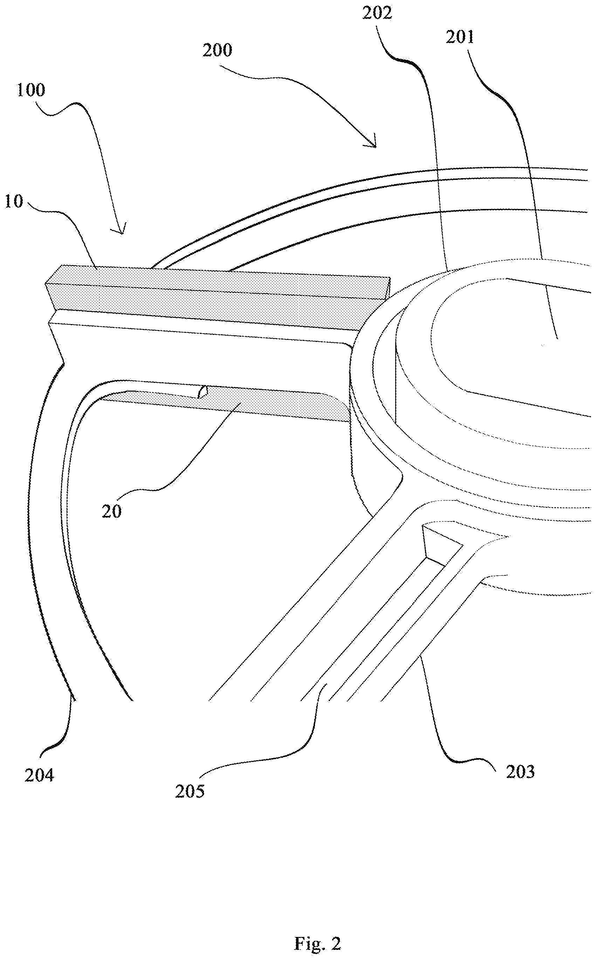

- FIGURE 2 illustrates the cutter holder 200 suitable to be used in the production plant that provides for the use of cutters 100 of the present invention. More in detail, the central metal body 202, with the central hole 201 suitable for the passage of the plant driving shaft, is shown. The radial arms 203 (of which just two are represented) terminating in the circular perimeter crown 204 depart from said central metal body 202. A cutter 100 of the present invention in assembled configuration is observable in one of the two radial arms 203 represented in the figure. In the other represented radial arm 203, the seat 205 for housing the cutter 100 is instead shown.

### Detailed description of the invention

Now, the present invention will be illustrated purely by way of non-limiting example, with reference to the figures illustrating some embodiments regarding the present inventive concept.

With reference to FIG. 2, a part of the sausages production plant, in particular the cutter holder 200 designated for the step of cutting/mincing the meat is represented. More specifically, this cutter holder 200, just like the prior art cutters, is provided with a central metal body 202 provided with a central hole 201 through which the plant driving shaft that transmits motion to all rotary parts of the plant itself passes. A plurality of radial arms 203 that terminate in the circular perimeter crown 204 concentric to said central metal body 202 depart from said central metal body 202. The distinctive trait of this cutter holder 200 with respect to the currently available ones lies in that each of the radial arms 203, in proximity of said perimeter crown 204, has a seat 205 for housing a cutter 100 of the present invention. Arranged longitudinally with respect to the radial arm 203, it is a fissure replicating the dimensions of the cutter 100 with which it is reversibly engaged. More in detail, the cutter 100 of the present invention will always be inscribed in a parallelepiped shaped element with dimensions measured between 30 mm X 15 mm X 3 mm and 90 mm X 30 mm X 10 mm. The configuration of the plant provides stability to the position of the cutter 100 with respect to the cutter holder 200, given the vicinity of the extrusion fixed discs arranged both upstream and downstream of the cutter holder 200. In any case, should it be deemed necessary, every radial arm 203 may be provided, at said seat 205, with common mechanical means such as screws, pins or the like, for fixing the cutter 100 stably but reversibly. The cutter 100 represented in the cutter holder 200, still with reference to FIG. 2, is the same one represented in detail in FIGS. 1A and 1B. In order to serve both its cutting purpose and have the advantage of flexibility and maintenance ease, the cutter 100 in question is made up of two components that are reversibly and easily modulable.

The first element 10 is T-shaped and it is constituted by an outer sharp profile 11 and a central projection 15 provided, laterally, with a pair of concavities 16-16', one to the right and one to the left of said central projection 15. The second element 20 is C-shaped and it is constituted by an outer sharp profile 21 and by a pair of bending arms 26-26' provided, at the relative distal ends, with a convexity 27-27'. Said bending arms 26-26', depart from the ends and extend towards the centre of the cutter 100, conferring the aforementioned "C" shape to said second element 20.

FIG. 1B enables to easily understand the composition of said elements 10, 20 in an assembled configuration in which the latter are engaged mutually and reversibly.

In said assembled configuration, in particular, the convexities 27-27' of the two bending arms 26-26' of the second element 20 are reversibly but stably coupled in the corresponding convexities 16-16' of the first element 10. It is clear that in order to ensure that the previously described assembled configuration is maintained, a given tension between the first and the second element 10, 20 is required. As a matter of fact, said first assembled configuration is configured so as to confer a predetermined tensional load to said bending arms 26-26'. Thus, two elements 10, 20 are necessarily obtained using common mechanical means such as grippers or the like. Similarly, the disassembly of said elements 10, 20, performed with the sole purpose of enabling normal cleaning and maintenance operations in an easy and quick manner, will be obtained using the same instruments.

Given the pre-load tension that said bending arms 26-26' must bear, it is suitable that the metal or metal alloy material selected to obtain the cutter 100 be an elastic metal material. As observable in FIG. 1B, besides the fissure 30 already present between the inner surface of the sharp profile 21 and the bending arms 26-26', fissures 30 between the sharp profile 11 of the first element 10 and the bending arms 26-26' occur when the cutter 100 is in assembled configuration. Such fissures 30 are suitable to enable the bending of said bending arms 26-26' due to the pressure caused by the resistance of the meat to be minced. The bending of the cutters 100 is actually the characteristic that prevents the release of metal parts into the meat, by avoiding excessive friction between the components of the plant and thus attaining the object of the invention.

More in detail, the thickness of said fissures 30' will be comprised between 0.2 mm and 3 mm, preferably equivalent to 1 mm.

The particular configuration of the cutter 100 of the present invention, is such to make the use thereof advantageous for producing sausages, but more in particular advantageous for producing salamis.

Lastly, it is clear that the invention described up to now may be subjected to modifications, additions or variants obvious to a man skilled in the art, without departing from the scope of protection outlined by the attached claims.

## Claims

1. Reversibly modular elastic cutter (100) for producing salamis, suitable to be reversibly engaged with the radial arm (203) of a cutter holder (200) and to be used during the step of cutting/mincing animal meat in an industrial sausage production plant; said cutter (100) being **characterised in that** it is constituted by at least one first T-shaped element (10) and one second C-shaped element (20), said first element (10) being constituted by an outer sharp profile (11) and a central projection (15) laterally provided with a pair of concavities (16-16'); said second element (20) being constituted by an outer sharp profile (21) and a pair of bending arms (26-26') provided - at the relative distal ends - with a convexity (27-27'); said elements (10, 20) being suitable to be mutually and reversibly engaged in a first assembled configuration, wherein the convexities (27-27') of the two bending arms (26-26') of said second element (20) are reversibly but stably coupled in the corresponding concavities (16-16') of said first element (10); said first assembled configuration being provided with a configuration such to confer a predetermined tensional load to said bending arms (26-26'); said cutter (100) being suitable to be reversibly inserted, when in said first assembled configuration, in a special seat (205) arranged on each of the radial arms (203) constituting the cutter holder (200) of the industrial meat production plant; said cutter (100) also being suitable to quickly and easily take a second disassembled configuration when removed from said cutter holder (200), wherein said first element (10) and said second element (20) are separated from each other to allow cleaning and maintenance thereof.

2. Reversibly modular elastic cutter (100) for producing salamis, according to the preceding claim 1, **characterised in that**, when in the first assembled configuration, between said sharp profile (11) of said first element (10) and said bending arms (26-26'), between said bending arms (26-26') and said sharp profile (21) of said second element (20), a plurality of fissures (30) are created that are suitable to allow the bending of said bending arms (26-26'); i.e. when the meat to be minced presses and deforms the fixed disc upstream, it takes a frusto-conical shape and the cutter (100) deforms absorbing part of the deformation imparted by the meat thus avoiding peak loads that could lead to unwanted wear out.

3. Reversibly modular elastic cutter (100) for producing salamis, according to the preceding claim 2, **characterised in that** the thickness of said fissures (30) is comprised between 0.2 mm and 3 mm, preferably 1 mm.

4. Reversibly modular elastic cutter (100) for producing salamis, according to any one of the preceding claims, **characterised in that** said first element (10) and said second element (20) can be reversibly assembled and disassembled in said first assembled configuration and in said second disassembled configuration using common mechanical means such as, for example, grippers, which allow the pre-loading of the bending arms (26-26').

5. Reversibly modular elastic cutter (100) for producing salamis, according to any one of the preceding claims, **characterised in that** it is reversibly engaged at one of the radial arms (203) of a common cutter holder (200), the latter being constituted by a central metal body (202), provided with a central hole (201), from which a plurality of radial arms (203) depart terminating in a perimeter circular crown (204) concentric to said central metal body (202); each of said radial arms (203) being **characterised by** a housing seat (205) constituted by a longitudinal fissure arranged in proximity of said perimeter circular crown (204), suitably dimensioned to be engaged with one of said cutters (100) in said first assembled configuration.

6. Reversibly modular elastic cutter (100) for producing salamis, according to the preceding claim 5, **characterised in that** said radial arm (203) at said seat (205), can be provided with common mechanical means such as screws, pins or the like, for stably but reversibly fixing said cutter (100) at the relative seat (205).

7. Reversibly modular elastic cutter (100) for producing salamis, according to any one of the preceding claims, **characterised in that**, when in said first assembled configuration it can be inscribed in a parallelepiped-shaped element measuring between 30 mm X 15 mm X 3 mm and 90 mm X 30 mm X 10 mm.

8. Reversibly modular elastic cutter (100) for producing salamis, according to any one of the preceding claims, **characterised in that** said bending arms (26-26') are provided with a longitudinal extension equivalent to about ¼ of the total length of the cutter (100, 100').

9. Reversibly modular elastic cutter (100) for producing salamis, according to any one of the preceding claims, **characterised in that** it is constituted by any metal or metal alloy, preferably any elastic metal material.

## Patentansprüche

1. Reversibles modulares elastisches Schneidelement (100) zum Herstellen von Salamis, das geeignet ist, mit dem radialen Arm (203) eines Schneidelementhalters (200) reversibel in Eingriff gebracht zu werden und während des Schrittes des Schneidens / Zerkleinerns von Tierfleisch in einer industriellen Wurstproduktionsanlage verwendet zu werden; wobei das Schneidelement (100) **dadurch gekennzeichnet ist, dass** es aus mindestens einem ersten T-förmigen Element (10) und einem zweiten C-förmigen Element (20) besteht, wobei das erste Element (10) aus einem äußeren scharfen Profil (11) und einem zentralen Vorsprung (15) besteht, der seitlich mit einem Paar von Konkavitäten (16-16') versehen ist; wobei das zweite Element (20) aus einem äußeren scharfen Profil (21) und einem Paar von Biegearmen (26-26') besteht, die - an den relativen distalen Enden - mit einer Konvexität (27-27') versehen sind; wobei die Elemente (10, 20) geeignet sind, in einer ersten zusammengebauten Konfiguration gegenseitig und reversibel in Eingriff gebracht zu werden, wobei die Konvexitäten (27-27') der beiden Biegearme (26-26') des zweiten Elements (20) reversibel aber stabil in die entsprechenden Konkavitäten (16-16') des ersten Elements (10) gekoppelt sind; wobei die erste zusammengebaute Konfiguration mit einer solchen Konfiguration versehen ist, dass sie den Biegearmen (26-26') eine vorbestimmte Zugbelastung verleiht; wobei das Schneidelement (100), wenn es sich in der ersten zusammengebauten Konfiguration befindet, geeignet ist, reversibel in einen speziellen Sitz (205) eingesetzt zu werden, der an jedem der radialen Arme (203) angeordnet ist, die den Schneidelementhalter (200) der industriellen Fleischproduktionsanlage bilden; wobei das Schneidelement (100)s, wenn es aus dem Schneidelementhalter (200) entfernt wird, auch geeignet ist, schnell und einfach eine zweite demontierte Konfiguration anzunehmen, wobei das erste Element (10) und das zweite Element (20) voneinander getrennt sind, um seine Reinigung und Wartung zu ermöglichen.

2. Reversibles modulares elastisches Schneidelement (100) zum Herstellen von Salamis gemäß Anspruch 1, **dadurch gekennzeichnet, dass**, wenn es sich in der ersten zusammengebauten Konfiguration befindet, zwischen dem scharfen Profil (11) des ersten Elements (10) und den Biegearmen (26-26'), zwischen den Biegearmen (26-26') und dem scharfen Profil (21) des zweiten Elements (20) mehrere Spalte (30) erzeugt werden, die geeignet sind, das Biegen der Biegearme (26-26') zu erlauben, d.h.: wenn das zu zerkleinernde Fleisch die feste Scheibe stromaufwärts drückt und verformt, nimmt sie eine kegelstumpfförmige Form an, und das Schneidelement (100) verformt sich, wobei es einen Teil der durch das Fleisch ausgeübten Verformung absorbiert, wodurch Spitzenbelastungen, die zu unerwünschtem Verschleiß führen könnten, vermieden werden.

3. Reversibles modulares elastisches Schneidelement (100) zum Herstellen von Salamis gemäß Anspruch 2, **dadurch gekennzeichnet, dass** die Dicke der Spalten (30) zwischen 0,2 mm und 3 mm, vorzugsweise 1 mm, beträgt.

4. Reversibles modulares elastisches Schneidelement (100) zum Herstellen von Salamis gemäß einem der vorhergehenden Ansprüche, **dadurch gekennzeichnet, dass** das erste Element (10) und das zweite Element (20) in der ersten zusammengebauten Konfiguration und in der zweiten auseinandergenommenen Konfiguration unter Verwendung gewöhnlicher mechanischer Mittel wie beispielsweise Greifer, die ein Vorbelasten der Biegearme (26-26') ermöglichen, reversibel zusammengebaut und auseinandergenommen werden können.

5. Reversibles modulares elastisches Schneidelement (100) zum Herstellen von Salamis gemäß einem der vorangehenden Ansprüche, **dadurch gekennzeichnet, dass** es reversibel an einem der radialen Arme (203) eines gewöhnlichen Schneidelementhalters (200) in Eingriff steht, wobei letzterer aus einem zentralen Metallkörper (202) besteht, der mit einem zentralen Loch (201) versehen ist, von dem mehrere radiale Arme (203) ausgehen, die in einer kreisförmigen, zu dem zentralen Metallkörper (202) konzentrischen Umfangskrone (204) enden; wobei jeder der radialen Arme (203) durch einen Aufnahmesitz (205) gekennzeichnet ist, der durch einen länglichen Spalt gebildet wird, die in der Nähe der kreisförmigen Umfangskrone (204) angeordnet und geeignet dimensioniert ist, um in der ersten zusammengebauten Konfiguration mit einem der Schneidelemente (100) in Eingriff gebracht zu werden.

6. Reversibles modulares elastisches Schneidelement (100) zum Herstellen von Salamis gemäß Anspruch 5, **dadurch gekennzeichnet, dass** der radiale Arm (203) an dem Sitz (205) mit gewöhnlichen mechanischen Mitteln wie Schrauben, Stiften oder dergleichen versehen werden kann, um das Schneidelement (100) stabil aber reversibel an dem entsprechenden Sitz (205) zu befestigen.

7. Reversibles modulares elastisches Schneidelement (100) zum Herstellen von Salamis gemäß einem der vorangehenden Ansprüche, **dadurch gekennzeichnet, dass** es in der ersten zusammengebauten Konfiguration in ein parallelepipedförmiges Element mit Abmessungen zwischen 30 mm x 15 mm x 3 mm und 90 mm x 30 mm x 10 mm eingeschrieben werden kann.

8. Reversibles modulares elastisches Schneidelement (100) zum Herstellen von Salamis gemäß einem der vorhergehenden Ansprüche, **dadurch gekennzeichnet, dass** die Biegearme (26-26') mit einer Längsausdehnung versehen sind, die etwa ¼ der Gesamtlänge des Schneidelements (100, 100') entspricht.

9. Reversibles modulares elastisches Schneidelement (100) zum Herstellen von Salamis gemäß einem der vorangehenden Ansprüche, **dadurch gekennzeichnet, dass** es aus einem beliebigen Metall oder einer beliebigen Metalllegierung, vorzugsweise einem beliebigen elastischen Metallmaterial, besteht.

## Revendications

1. Couteau élastique modulaire de manière réversible (100) pour produire des salamis, apte à être engagé de manière réversible avec le bras radial (203) d'un porte-couteau (200) et à être utilisé pendant l'étape de coupe/hachage de viande animale dans une installation de production industrielle de saucisson ; ledit couteau (100) étant **caractérisé en ce qu'**il est constitué par au moins un premier élément en forme de T (10) et un deuxième élément en forme de C (20), ledit premier élément (10) étant constitué par un profil tranchant extérieur (11) et une saillie centrale (15) pourvue latéralement d'une paire de concavités (16-16') ; ledit deuxième élément (20) étant constitué par un profil tranchant extérieur (21) et une paire de bras de flexion (26-26') pourvue - aux extrémités distales relatives - d'une convexité (27-27') ; lesdits éléments (10, 20) étant aptes à être engagés mutuellement et de manière réversible dans une première configuration assemblée dans laquelle les convexités (27-27') des deux bras de flexion (26-26') dudit deuxième élément (20) sont couplées de manière réversible mais stable dans les concavités correspondantes (16-16') dudit premier élément (10) ; ladite première configuration assemblée étant pourvue d'une configuration de manière à conférer une charge de tension prédéterminée auxdits bras de flexion (26-26') ; ledit couteau (100) étant apte à être inséré de manière réversible, quand il est dans la première configuration assemblée, dans une embase spéciale (205) disposée sur chacun des bras radiaux (203) constituant le porte-couteau (200) de l'installation de production industrielle de viande ; ledit couteau (100) étant également apte à prendre rapidement et facilement une deuxième configuration désassemblée quand il est enlevé dudit porte-couteau (200), dans laquelle le premier élément (10) et ledit deuxième élément (20) sont séparés l'un de l'autre pour permettre leur nettoyage et leur entretien.

2. Couteau élastique modulaire de manière réversible (100) pour produire des salamis, selon la revendication 1 précédente, **caractérisé en ce que** quand il est dans la première configuration assemblée, entre le profil tranchant (11) dudit premier élément (10) et lesdits bras de flexion (26-26'), entre lesdits bras de flexion (26-26') et le profil tranchant (21) dudit deuxième élément (20), une pluralité de fentes (30) sont créées, qui sont aptes à permettre la flexion desdits bras de flexion (26-26') ; c'est-à-dire que quand la viande à hacher pousse et déforme le disque fixe amont, elle prend une forme tronconique et le couteau (100) se déforme en absorbant une partie de la déformation communiquée par la viande, évitant ainsi des charges de pointe qui pourraient entraîner une usure indésirable.

3. Couteau élastique modulaire de manière réversible (100) pour produire des salamis, selon la revendication 2 précédente, **caractérisé en ce que** l'épaisseur desdites fentes (30) est comprise entre 0,2 mm et 3 mm, de préférence 1 mm.

4. Couteau élastique modulaire de manière réversible (100) pour produire des salamis, selon l'une quelconque des revendications précédentes, **caractérisé en ce que** ledit premier élément (10) et ledit deuxième élément (20) peuvent être assemblés et désassemblés de manière réversible dans ladite première configuration assemblée et dans ladite deuxième configuration désassemblée en utilisant des moyens mécaniques courants comme par exemple des dispositifs de préhension, qui permettent la précontrainte des bras de flexion (26-26').

5. Couteau élastique modulaire de manière réversible (100) pour produire des salamis, selon l'une quelconque des revendications précédentes, **caractérisé en ce qu'**il est engagé de manière réversible à l'un des bras radiaux (203) d'un porte-couteau courant (200), ce dernier étant constitué par un corps en métal central (202), pourvu d'un trou central (201), d'où partent une pluralité de bras radiaux (203) se terminant par une couronne circulaire périphérique (204) concentrique par rapport audit corps en métal central (202) ; chacun desdits bras radiaux (203) étant **caractérisé par** une embase de logement (205) constituée par une fente longitudinale à proximité de ladite couronne circulaire périphérique (204), dimensionnée de manière appropriée pour être engagée avec l'un desdits couteaux (100) dans ladite première configuration assemblée.

6. Couteau élastique modulaire de manière réversible (100) pour produire des salamis, selon la revendication 5 précédente, **caractérisé en ce que** ledit bras radial (203), à l'embase (205), peut être pourvu de moyens mécaniques courants tels que des vis, des tiges ou similaires, pour fixer de manière stable mais réversible ledit couteau (100) à ladite embase relative (205).

7. Couteau élastique modulaire de manière réversible (100) pour produire des salamis, selon l'une quelconque des revendications précédentes, **caractérisé en ce que** dans ladite première configuration assemblée il peut être inscrit dans un élément en forme de parallélépipède mesurant entre 30 mm X 15 mm X 3 mm et 90 mm X 30 mm X 10 mm.

8. Couteau élastique modulaire de manière réversible (100) pour produire des salamis, selon l'une quelconque des revendications précédentes, **caractérisé en ce que** lesdits bras de flexion (26-26') sont pourvus d'une extension longitudinale équivalente à environ ¼ de la longueur totale du couteau (100, 100').

9. Couteau élastique modulaire de manière réversible (100) pour produire des salamis, selon l'une quelconque des revendications précédentes, **caractérisé en ce qu'**il est constitué par tout métal ou alliage de métaux, de préférence tout matériau en métal élastique.
